# EUROPÄISCHE PATENTANMELDUNG

(11) **EP 4 780 030 A1**
(43) Veröffentlichungstag der Anmeldung: **22.07.2026**
(21) Anmeldenummer: 26151094.5
(22) Anmeldetag: 09.01.2026
(51) Int. Cl.: H04W 8/18, H04W 48/18

(54) **SICHERES ELEMENT, ENDGERÄT UND VERFAHREN ZUM KONFIGURIEREN EINER NETZWERKSUCHE**

(30) Priorität: 15.01.2025 DE 102025101378
(71) Anmelder: Giesecke+Devrient Mobile Security Germany GmbH, 81677 München (DE)
(72) Erfinder: SCHNELLINGER, Michael, 81677 München (DE); RÖSNER, Martin, 81677 München (DE)
(74) Vertreter: Ter Meer Steinmeister & Partner

(57) **Zusammenfassung**

Gemäß einem Aspekt der vorliegenden Erfindung wird ein sicheres Element zur Kommunikation über ein Kommunikationsnetz bereitgestellt. Das sichere Element umfasst: einen Speicherbereich, in dem eine Heimatnetzwerkkonfiguration und eine Länderkennung abgelegt sind; und eine Steuervorrichtung. Die Steuervorrichtung ist zu Folgendem konfiguriert: Empfangen einer neuen Länderkennung während eines Registrierungsversuchs in das Kommunikationsnetz; wenn sich die neue Länderkennung von der abgelegten Länderkennung unterscheidet, Schreiben einer Netzwerkkennung, die der aktuellen Länderkennung entspricht, in die Heimatnetzwerkkonfiguration; und Fortsetzen des Registrierungsversuchs.

## Beschreibung

### Technisches Gebiet der Erfindung

Die Erfindung betrifft ein sicheres Element, ein Endgerät und ein entsprechendes Verfahren zum Konfigurieren einer Netzwerksuche, insbesondere für Anwendungsfälle im Bereich des Internets der Dinge (IoT).

### Technischer Hintergrund der Erfindung

Sichere Elemente im Rahmen der vorliegenden Offenbarung sind Hardware- und/oder Softwarekomponenten, mittels derer sich ein Endgerät für ein Kommunikationsnetz eines Anbieters bzw. Netzwerkbetreibers registrieren bzw. in das Kommunikationsnetz einbuchen kann.

Durch das Internet der Dinge sind eine große Anzahl von Endgeräten entwickelt und bereitgestellt worden, die eingerichtet sind verschiedenste Daten über ein Kommunikationsnetz an Server bspw. einer Cloud-Anwendung zu übermitteln. Derartige Endgeräte können z. B. als energieautarke Einheiten zur Überwachung von Objekten, Fahrzeugen, Waren, usw. eingesetzt werden, um deren Position und/oder Zustand möglichst in Echtzeit zu verfolgen. Diese Endgeräte können häufigen Standortwechseln unterliegen, und können deshalb gezwungen sein, häufig das Kommunikationsnetz zu wechseln. Diese Endgeräte können als sogenannte Track-and-Trace-Geräte Anwendung in verschiedenen Bereichen wie Logistik, Lieferkettenmanagement, Behälterverfolgung und Diebstahlschutz finden.

In einem sicheren Element ist üblicherweise hinterlegt, in welcher Reihenfolge nach Verbindungsversuche mit neuen Kommunikationsnetzwerken vorgenommen werden. Für öffentliche terrestrische Mobilfunknetze (Public Land Mobile Network - PLMN) ist diese Reihenfolge bspw. in der Norm ETSI TS 123 122 (V18.7.1) festgelegt. Hierzu ist in dem sicheren Element zumindest ein Heimatnetzwerk, z. B. Heimat-PLMN (HPLMN) konfiguriert. Zusätzlich können von einem Benutzer bzw. einem Betreiber Netzwerke bzw. PLMNs konfiguriert werden für den Fall, dass das Heimatnetzwerk nicht verfügbar ist.

Bei einem Kommunikationsnetzwechsel werden zunächst Verbindungsversuche mit jedem der Heimatnetzwerke in der Reihenfolge ihrer Auflistung in dem sicheren Element und, falls nötig, daran anschließend weitere Verbindungsversuche mit den relevanten benutzerseitig und/oder betreiberseitig festgelegten Netzwerken durchgeführt. D. h. bei einem Endgerät, das häufig seinen Standort wechselt und möglicherweise kaum Zugriff auf das HPLMN hat, werden bei jedem Kommunikationsnetzwechsel mehrere Verbindungsversuche benötigt, bis sich das Endgerät wieder in einem neuen Kommunikationsnetz registrieren kann.

Vernetze Endgeräte für das Internet der Dinge, insbesondere Track-and-Trace-Geräte, haben jedoch eine begrenzte Batteriekapazität, die oftmals weder erweiterbar noch regenerierbar ist. Jeder Verbindungsversuch ist energieaufwendig, sodass Kommunikationsnetzwechsel einen erheblichen Einfluss auf die Laufzeit der Endgeräte haben können.

In speziellen Fällen können Endgeräte nur zur Kommunikation über Heimatnetzwerke konfiguriert sein, z. B. um Herstellungs- und/oder Betriebskosten weiter zu senken. Bei dieser Konfiguration sollte davon ausgegangen werden können, dass das Endgerät sowieso nur im Gebiet der Heimatnetzwerke eingesetzt wird. Diese Konfiguration mag für Heimatnetzwerke mit hinreichend großflächiger Abdeckung in wenigen Ländern der Welt funktionieren. In anderen Regionen, die z. B. eine Vielzahl von Staatsgrenzen umfassen, beschränkt diese Konfiguration jedoch den Einsatz derartiger Endgeräte erheblich.

### Zusammenfassung der Erfindung

Daher besteht ein Bedarf an einem sicheren Element, an einem Endgerät sowie an einem dazu korrespondierenden Verfahren, das für einen möglichst energieeffiziente Kommunikationsnetzwechsel eingerichtet ist.

Es besteht ferner Bedarf an einem sicheren Element sowie an einem dazu korrespondierenden Verfahren, um die Lebensdauer bzw. Laufzeit von bestehenden, energieautarken Endgeräten, die zur Kommunikation über ein Kommunikationsnetz konfiguriert sind, zu verlängern.

Es ist eine weitere Aufgabe der Erfindung, ein sicheres Element bzw. ein Endgerät bereitzustellen, das eine verbesserte Konnektivität zu neuen Kommunikationsnetzen ausgehend von ursprünglich eingestellten Heimatnetzwerken aufweist.

Zumindest eine dieser Aufgaben wird durch das sichere Element, das Endgerät und/oder das Verfahren nach den jeweiligen unabhängigen Ansprüchen gelöst. Weiterbildungen davon sind in den jeweiligen abhängigen Ansprüchen angegeben.

Der Erfindung liegt die Idee zugrunde, die Netzwerksuche für ein sicheres Element bzw. ein damit ausgestattetes Endgerät dadurch abzukürzen, dass eine oder mehrere relevante Netzwerkkennungen jeweils dynamisch in die Heimatnetzwerkkonfiguration geschrieben werden.

Gemäß einem Aspekt der vorliegenden Erfindung wird ein sicheres Element zur Kommunikation über ein Kommunikationsnetz bereitgestellt. Das sichere Element umfasst: einen Speicherbereich, in dem eine Heimatnetzwerkkonfiguration und eine Länderkennung abgelegt sind; und eine Steuervorrichtung. Die Steuervorrichtung ist zu Folgendem konfiguriert: Empfangen einer neuen Länderkennung während eines Registrierungsversuchs in das Kommunikationsnetz; wenn sich die neue Länderkennung von der abgelegten Länderkennung unterscheidet, Schreiben einer Netzwerkkennung, die der aktuellen Länderkennung entspricht, in die Heimatnetzwerkkonfiguration; und Fortsetzen des Registrierungsversuchs. Die Steuervorrichtung ist also konfiguriert, eine der neuen Ländererkennung entsprechenden Netzwerkkennung in die Heimatnetzwerkkonfiguration zu schreiben.

Gemäß einem weiteren Aspekt der vorliegenden Erfindung wird ein Endgerät zur Kommunikation über ein Kommunikationsnetz bereitgestellt. Das Endgerät umfasst ein sicheres Element gemäß einem Aspekt der vorliegenden Erfindung; eine Batterie und eine Sende- und Empfangseinrichtung. Die Sende- und Empfangseinrichtung ist konfiguriert, nach Netzwerken zu suchen und den neuen Ländercode zu ermitteln.

Gemäß einem weiteren Aspekt der vorliegenden Erfindung wird ein Verfahren zum Konfigurieren einer Netzwerksuche für einen Registrierungsversuch eines sicheren Elements in ein Kommunikationsnetz bereitgestellt. Das Verfahren umfasst: Empfangen einer neuen Länderkennung; Vergleichen der neuen Länderkennung mit einer im sicheren Element abgelegten Länderkennung; und wenn sich die neue Länderkennung von der abgelegten Länderkennung unterscheidet: Ermitteln einer Netzwerkkennung, die der neuen Länderkennung entspricht; und Schreiben der Netzwerkkennung in die Heimatnetzwerkkonfiguration.

Gemäß einem weiteren Aspekt der vorliegenden Erfindung wird ein maschinenlesbares Speichermedium bereitgestellt. Das maschinenlesbare Speichermedium umfasst Befehle, die bei der Ausführung durch eine Steuervorrichtung, insbesondere eines sicheren Elements, diese veranlassen, das Verfahren gemäß einem Aspekt der vorliegenden Erfindung auszuführen.

Das sichere Element, ein darauf basierendes Endgerät und ein zu dem sicheren Element korrespondierendes Verfahren haben gemeinsam, basierend auf einer neuen Länderkennung eine dieser Länderkennung entsprechende Netzwerkkennung zu ermitteln und die Heimatnetzwerkkonfiguration durch diese ermittelte Netzwerckennung anzureichern. Dadurch kann eine mit dem sicheren Element gekoppelte Sende- und Empfangseinrichtung, die jedenfalls zuerst die Heimatnetzwerkkonfiguration nach verfügbaren Kommunikationsnetzen absucht, schneller ein der neuen Länderkennung entsprechendes Kommunikationsnetz finden. Somit kann die Netzwerksuche erheblich abgekürzt werden, insbesondere bei einem Kommunikationsnetzwechsel.

Das sichere Element, das Endgerät und/oder das Verfahren können ferner zumindest eines der folgenden Merkmale aufweisen:
Das Kommunikationsnetz kann im Rahmen der vorliegenden Offenbarung ein PLMN sein. Das Kommunikationsnetz kann durch eine Netzwerkkennung, vorzugsweise eine PLMN-Kennung bzw. PLMN-ID, identifizierbar sein. Die Netzwerkkennung kann weltweit eineindeutig sein. Die Netzwerkkennung kann einen Ländercode, vorzugsweise einen Mobile Country Code (MCC) umfassen. Die Netzwerckennung kann einen Mobile Network Code (MNC) umfassen.

Ein sicheres Element, abgekürzt SE, im Sinne der Erfindung ist ein in Größe und Ressourcenumfang reduziertes elektronisches Modul, das eine Steuereinheit (Mikrocontroller) und mindestens eine Schnittstelle (Datenschnittstelle) zur Kommunikation mit außerhalb des sicheren Elements befindlichen Instanzen, wie Endgeräten, Servern etc. aufweisen kann. Diese Kommunikation erfolgt vorzugsweise über ein Verbindungsprotokoll, im Falle eines sicheren Elements insbesondere über ein Protokoll nach der Norm ETSI TS 102 221, GSMA SGP.31 oder GSMA SGP.32.

Das sichere Element kann auch eine Softwarekomponente in einem vertrauenswürdigen Teil eines Betriebssystems, einer sogenannten vertrauenswürdigen Ausführungsumgebung (Trusted Execution Environment, TEE) des Geräts sein.

Das sichere Element kann auch integraler Bestandteil eines größeren integrierten Schaltkreises sein, z. B. eines Modems oder eines Anwendungsprozessors. Solche UICCs werden als "integrierte UICC", "integrierte TRE", "integrierte eUICC" oder "integrierte SE" bezeichnet. Solche sicheren Elemente sind als integrierter Prozessorblock fest in ein SoC integriert und können über einen In-Chip-Bus angeschlossen werden.

Die Heimatnetzwerkkonfiguration kann eine Liste mit Netzwerkkennungen der Heimatnetzwerke umfassen. Die Heimatnetzwerkkonfiguration kann in einer Basisdatei (Elementary File, EF) in dem Speicherbereich des sicheren Elements abgelegt bzw. gespeichert sein. Die Heimatnetzwerkkonfiguration kann eine Liste mit Netzwerkkennungen von Heimatäquivalenten Netzwerken umfassen.

Ein Registrierungsversuch kann von einer Sende- und Empfangseinrichtung, mit der das sichere Element verbunden ist, initialisiert werden. Ein Registrierungsversuch kann beispielsweise mittels einem AT-Kommando initialisiert werden. Der Begriff "Registrierungsversuch in ein Kommunikationsnetz" wird im Rahmen der vorliegenden Offenbarung synonym mit dem Begriff "Verbindungsversuch zu dem Kommunikationsnetz" verwendet.

Das sichere Element kann die neue Länderkennung von einer Sende- und Empfangseinrichtung, an die das sichere Element gekoppelt ist, empfangen. Dazu kann das sichere Element bzw. ein Applet im sicheren Element im Rahmen des Card Application Toolkits (CAT), wie gemäß der Norm ETSI TS 102 223 (V18.0.0), getriggert werden. Beispielsweise kann die neue Länderkennung als MCC in Form eines "LOCA-TION STATUS EVENT" und/oder durch den Befehl "PROVIDE LOCAL INFORMATION" von der Sende- und Empfangseinrichtung bzw. einem Terminal umfassend die Sende- und Empfangseinrichtung dem sicheren Element übermittelt werden. Alternativ kann die neue Länderkennung dem sicheren Element durch eine externe Funktion bzw. Anwendung übermittelt werden. Die neue Länderkennung kann in dem Speicherbereich des sicheren Elements abgelegt werden und/oder die abgelegte Länderkennung im Speicherbereich des sicheren Elements ersetzen.

Das sichere Element kann die Netzwerkkennung, die der neuen bzw. aktuellen Länderkennung entspricht, kurz: "neue Netzwerkkennung", aus seinem eigenen Speicherbereich auslesen bzw. ermitteln. Beispielsweise können in der betreiberseitigen Netzwerkkonfiguration, insbesondere der operator controlled PLMN (OPLMN), Netzwerkkennungen gespeichert sein. Eine Netzwerkkennung kann der neuen Länderkennung entsprechen bspw. indem die Netzwerkkennung die neue Länderkennung umfasst, insbesondere deren MCC.

Durch das Schreiben der der neuen Länderkennung entsprechenden Netzwerkkennung in die Heimatnetzwerkkonfiguration kann beim Fortsetzen des Registrierungsversuch sichergestellt werden, dass gezielt ein der neuen Länderkennung entsprechendes Kommunikationsnetz ausgewählt wird.

Die Netzwerkkennung, die der neuen Länderkennung entspricht, kann vorrangig vor der Netzwerkkennung des bisherigen Heimatnetzwerks in die Heimatnetzwerckonfiguration des sicheren Elements geschrieben werden. Die Netzwerkkennung, die der neuen Länderkennung entspricht kann die Netzwerkkennung des bisherigen Heimatnetzwerks ersetzen. Diese Konfiguration kann die Anzahl der erforderlichen Verbindungsversuche bei einem Kommunikationsnetzwechsel reduzieren und damit einhergehend die Energieeffizienz des Kommunikationsnetzwechsels verbessern.

Dadurch kann sichergestellt werden, dass beim Fortsetzen des Registrierungsversuchs unmittelbar ein der neuen Länderkennung entsprechendes Kommunikationsnetz ausgewählt wird. Diese Konfiguration kann die Anzahl der erforderlichen Verbindungsversuche bei einem Kommunikationsnetzwechsel erheblich reduzieren und damit einhergehend die Energieeffizienz des Kommunikationsnetzwechsels erheblich verbessern.

In dem Speicherbereich des sicheren Elements kann ferner eine Betreiber-gesteuerte Netzwerkkonfiguration abgelegt sein. Die Betreiber-gesteuerte oder betreiberspezifische Netzwerkkonfiguration kann eine Liste von Netzwerkkennungen umfassen. Die Betreiber-gesteuerte Netzwerkkonfiguration kann insbesondere als OPLMN in dem sicheren Element konfiguriert sein. Die Betreiber-gesteuerte Netzwerkkonfiguration kann eine Vielzahl von Netzwerkkennungen umfassen, die jeweils eine Länderkennung bzw. einen Ländercode umfassen. D. h. pro Länderkennung können ein oder mehrere Netzwerkkennungen in der Betreiber-gesteuerte Netzwerkkonfiguration gespeichert sein. Die Steuervorrichtung kann eingerichtet sein, die Netzwerckennung, die der neuen Länderkennung entspricht, basierend auf der Betreiber-gesteuerte Netzwerkkonfiguration zu ermitteln.

Diese Konfiguration hat den Vorteil, dass keinerlei zusätzliche Verbindung erforderlich ist zum Ermitteln einer passenden Netzwerkkennung.

Die Betreiber-gesteuerte Netzwerkkonfiguration kann eine Liste von Netzwerkkennungen, die jeweils einer Länderkennung aus einer Vielzahl von Länderkennungen entsprechen, umfassen. Die Betreiber-gesteuerte Netzwerkkonfiguration kann als Basisdatei Operator Public Land Mobile Network (OPLMN) abgelegt sein. Als Betreiber kommt bspw. der Betreiber des Heimatnetzwerks in Betracht. Das OPLMN ist im sicheren Element einfach zugreifbar, sodass Kandidaten für Kommunikationsnetze entsprechend der neuen Länderkennung besonders einfach und effektiv ermitteln werden können.

Die Steuervorrichtung kann konfiguriert sein, die Netzwerkkennung von außerhalb des sicheren Elements zu empfangen.

Die Heimatnetzwerkkonfiguration kann eine Liste von äquivalenten Heimatnetzwerken bzw. heimatäquivalenten Netzwerken umfassen. Die Liste von äquivalenten Heimatnetzwerken ist herkömmlicherweise rein optional. Falls die Heimatnetzwerkkonfiguration eine Netzwerkkennung eines heimatäquivalenten Netzwerkes umfasst, wird diese Netzwerkkennung jedoch genauso wie die Netzwerkkennung eines Heimatnetzwerkes verarbeitet. D. h. bei einer Kommunikationsnetzsuche werden neben dem Heimatnetzwerk auch alle heimatäquivalenten Netzwerke standardmäßig abgesucht. Die Liste von äquivalenten Heimatnetzwerken kann vorzugsweise als Basisdatei Equivalent Home Public Land Mobile Network (EHPLMN) in dem Speicherbereich des sicheren Elements abgelegt sein. Die Basisdatei EHPLMN, auch als EF_EHPLMN bezeichnet, kann gemäß der Norm 3GPP TS 31.102 spezifiziert sein. Die Steuervorrichtung kann eingerichtet sein, die Netzwerkkennung, die der neuen Länderkennung entspricht, in die Liste von äquivalenten Heimatnetzwerken zu schreiben. Da ein mit dem sicheren Element gekoppeltes Modem zuerst nach Heimatnetzwerken sucht, findet es schneller ein passendes Netzwerk, wenn ein Eintrag in EF_EHPLMN mit einem der gescannten Netzwerke übereinstimmt. Dadurch kann die Zeit, die für die Registrierung eines Geräts in einem Kommunikationsnetz benötigt wird, erheblich reduziert werden. Dadurch kann der Energieverbrauch des entsprechenden Endgeräts ebenfalls erheblich reduziert werden.

Der Inhalt des EF_EHPLMN ist als statisch konzipiert. Gemäß einem Aspekt der Erfindung kann der Inhalt des EF_EHPLMN jedoch dynamisch verwaltet werden, beispielsweise durch ein JavaCard Applet und/oder durch eine externe Anwendung, die mit dem sicheren Element kommunizieren kann, sodass das EF_EHPLMN stets zumindest eine Netzwerkkennung eines verfügbaren Kommunikationsnetzes enthält, das als Heimatnetzwerk erkannt werden kann, selbst bei etwaigen Länderwechsel (z. B. als Track-and-Trace-Endgerät).

Diese Konfiguration hat den Vorteil, dass das HPLMN nicht angepasst werden muss. Folglich kann das HPLMN durch die Lösung nach einem Aspekt der Erfindung nicht zufälligerweise korrumpiert werden, etwa durch Injektion eines fehlerhaften MNC. Nachdem die Netzwerkkennungen, die im EHPLMN gespeichert sind, als äquivalent zu den Netzwerkkennungen, die im HPLMN gespeichert sind, wirken können, kann der technische Effekt der Lösung nach einem Aspekt der Erfindung in dieser Konfiguration ebenso bewirkt werden.

Die Steuervorrichtung kann konfiguriert sein, zumindest eine Netzwerkkennung der Betreiber-gesteuerten Netzwerkkonfiguration, deren Länderkennung der neuen Länderkennung entspricht, aus der Betreiber-gesteuerten Netzwerkkonfiguration in die Liste von äquivalenten Heimatnetzwerken zu kopieren.

Das Kopieren der Netzwerkkennung, die der neuen Länderkennung entspricht, von dem OPLMN in das EHPLMN kann als Priorisierung der neuen Netzwerkkennung gegenüber einer Netzwerkkennung, die der bisherigen Länderkennung entspricht, interpretiert werden. Das Kopieren zwischen zwei Basisdateien bzw. Elementary Files (EF) im Speicherbereich des sicheren Elements kann besonders schnell und zuverlässig ausgeführt werden. Beim Kopieren der neuen Netzwerkkennung kann das EHPLMN mit der neunen Netzwerkkennung überschrieben werden. Diese Konfiguration verhindert eine Ansammlung von Netzwerkkennungen in dem EHPLMN in dem sicheren Element bei häufigen Kommunikationsnetzwechseln, z. B. bei Track-and-Trace-Anwendungen. Durch das Überschreiben der in dem EHPLMN gespeicherten Netzwerkkennungen mit der jeweils relevanten neuen Netzwerkkennung kann die Anzahl der erforderlichen Verbindungsversuche bei einem Kommunikationsnetzwechsel regelmäßig auf ein Minimum begrenzt werden und damit einhergehend die Energieeffizienz des Kommunikationsnetzwechsels weiter verbessern sowie die Laufzeit eines entsprechendes vernetzen Endgeräts verlängern.

Die Steuervorrichtung kann konfiguriert sein, einen "REFRESH"-Befehl proaktiv anzustoßen, um den Registrierungsversuch basierend auf der aktualisierten Heimatnetzwerkkonfiguration fortzusetzen. Beispielsweise kann die Steuervorrichtung ein Terminal, das das sichere Element umfasst, anweisen, einen Neustart des sicheren Elements durchzuführen und/oder eine Dateiänderungsbenachrichtigung (File-Change-Notifikation) an das sichere Element zu übermitteln.

Die Steuervorrichtung kann konfiguriert sein, den Registrierungsversuch nach dem Empfangen der neuen Länderkennung direkt fortzusetzen, wenn die neue Länderkennung gleich der abgelegten bzw. bisherigen Länderkennung ist. In diesem Fall ist keine Neuordnung der abzusuchenden Kommunikationsnetze erforderlich.

Das Endgerät umfasst eine Batterie. Die Batterie kann fest im Endgerät verbaut sein, d. h., nicht austauschbar sein. Die Batterie kann eine Primärbatterie sein, d. h. nicht wieder aufladbar sein. Die Laufzeit des Endgeräts kann demnach maßgeblich durch die Kapazität der Batterie abhängig sein. Daher kann ein sicheres Element nach einem der vorstehenden Aspekte der Erfindung, das in diesem Endgerät enthalten ist, die Laufzeit des Endgeräts aufgrund des Einsparens von unnützen Verbindungsversuchen bzw. Registrierungsversuchen wesentlich verlängern.

Das Endgerät kann ferner eine erste Schnittstelle zwischen der Sende- und Empfangseinrichtung und dem sicheren Element umfassen. Die erste Schnittstelle kann beispielsweise durch das CAT spezifiziert sein.

Die Sende- und Empfangseinrichtung kann eingerichtet sein, bei einer Netzwerksuche zum Registrierungsversuch nach Kommunikationsnetzen zu suchen, die in der Heimatnetzwerkkonfiguration und/oder einer benutzerspezifischen Netzwerkkonfiguration und/oder einer betreiberspezifischen Netzwerkkonfiguration hinterlegt sind. Die Sende- und Empfangseinrichtung kann eingerichtet sein, bei einer Netzwerksuche zum Registrierungsversuch nur nach denjenigen Netzwerken zu suchen, die in der Heimatnetzwerkkonfiguration hinterlegt sind. Die Sende- und Empfangseinrichtung kann ein Modem sein.

Die Sende- und Empfangseinrichtung kann eingerichtet sein, den ermittelten neuen Ländercode dem sicheren Element zu übermitteln. Dazu kann das sichere Element die Sende- und Empfangseinrichtung proaktiv anstoßen bzw. triggern. Der neue Ländercode kann mittels des CAT an das sichere Element übertragen werden.

Das Endgerät kann ferner eine Funktionseinheit aufweisen. Die Funktionseinheit kann eingerichtet sein, dem Endgerät eine bestimmte Funktion zu verleihen, beispielsweise eine Track-and-Trace-Funktion, eine Zustands- und/oder Transportüberwachungsfunktion und/oder eine verhaltensbasierte Kraftfahrzeugversicherungsfunktion, ohne auf diese Funktionen beschränkt zu sein. Die Funktionseinheit kann außerhalb des sicheren Elements und/oder außerhalb der Sende- und Empfangseinrichtung vorgesehen sein. Die Funktionseinheit kann eine Steuervorrichtung und eine Sensoreinheit umfassen. Die Sensoreinheit kann einen Ortungssensor umfassen. Die Sensoreinheit kann alternativ oder zusätzlich einen Beschleunigungssensor, einen Temperatursensor, einen Feuchtigkeitssensor, einen Drehwinkelsensor und/oder einen Umweltsensor umfassen. Die Steuervorrichtung der Funktionseinheit kann eingerichtet sein, ein Ortungssignal des Ortungssensors zu empfangen, die neue Länderkennung basierend auf dem Ortungssignal zu ermitteln und die neue Länderkennung dem sicheren Element bereitzustellen. Der Ortungssensor kann konfiguriert sein, Koordinaten des Endgeräts zu ermitteln, beispielsweise basierend auf einem globalen Navigationssatellitensystem (GNSS), wie etwa GPS, GLONASS, Galileo, Beidou, und so weiter. Das Ortungssignal kann einen Positionswert umfassen. Der Positionswert kann geographische Koordinaten mit Längengrad und Breitengrad umfassen. Der Positionswert kann einen Streckenabschnitt bzw. Streckenfortschritt entlang einer vorgegebene Transportstrecke umfassen.

Die dynamische Verwaltung der Heimatnetzwerkkonfiguration, insbesondere des EF_EHPLMN, durch die Funktionseinheit hat den zusätzlichen Vorteil, dass die Verwaltung besser überwacht werden kann. Im Vergleich zur Steuereinrichtung des sicheren Elements bzw. eines darauf ausgeführten Applets kann die Funktionseinheit selbst neue Länderkennungen ermitteln.

Die Steuervorrichtung der Funktionseinheit kann ferner konfiguriert sein, basierend auf dem Ortungssignal die neue Länderkennung jeweils für das aktuelle Land bzw. die aktuelle Region und zumindest ein angrenzendes Nachbarland bzw. zumindest eine angrenzende Nachbarregion zu ermitteln. Die Steuervorrichtung der Funktionseinheit kann ferner konfiguriert sein, die ermittelten neuen Länderkennungen dem sicheren Element bereitzustellen. Die Steuervorrichtung der Funktionseinheit kann konfiguriert sein, die ermittelten neuen Länderkennungen der Steuervorrichtung des sicheren Elements zu übermitteln und/oder neue Netzwerkkennungen basierend auf den neuen Länderkennungen direkt in die Heimatnetzwerkkonfiguration zu schreiben. In dieser Konfiguration kann die Heimatnetzwerkkonfiguration des sicheren Elements vorausschauend vorbereitet werden, etwa für Kommunikationsnetzwechsel bei Grenzübertritten zu einem Nachbarland.

Das Endgerät kann ferner eine zweite Schnittstelle zwischen der Funktionseinheit und dem sicheren Element umfassen. Über die zweite Schnittstelle kann insbesondere die Steuervorrichtung der Funktionseinheit der Steuervorrichtung des sicheren Elements Daten übermitteln. Das Endgerät kann ferner eine dritte Schnittstelle zwischen der Funktionseinheit und dem sicheren Element umfassen, über die die Steuervorrichtung der Funktionseinheit Netzwerkkennungen direkt in die Heimatnetzwerkkonfiguration des sicheren Elements schreiben kann.

In einem beispielhaften Anwendungsfall kann der Steuervorrichtung der Funktionseinheit eine vorbestimmte Strecke bzw. (Transport-)Route übermittelt werden. Die Steuervorrichtung kann die Strecke in Kommunikationsnetzabschnitte unterteilen, d. h., in Abschnitte, deren Grenzen durch die Abdeckung entsprechender Kommunikationsnetze vorgegeben sind. In einer einfachen Näherung können diese Grenzen mit Staatsgrenzen gleichgesetzt werden. Die Steuervorrichtung kann für jeden Abschnitt den entsprechenden Ländercode ermitteln und basierend darauf entsprechend neue Netzwerkkennungen. In diesem Fall kann die Heimatnetzwerkkonfiguration des sicheren Elements bereits für alle Abschnitte entlang der Strecke eingerichtet werden, d. h. für jeden Abschnitt die jeweils neu ermittelte Netzwerkkennung eingeschrieben werden.

Die Steuervorrichtung der Funktionseinheit kann ferner konfiguriert sein, die neue Länderkennung oder die neuen Länderkennungen der Steuervorrichtung des sicheren Elements zu übermitteln. Alternativ oder zusätzlich kann die Steuervorrichtung der Funktionseinheit konfiguriert sein, die jeweiligen neuen Netzwerkkennung direkt in die Liste von äquivalenten Heimatnetzwerken zu schreiben, insbesondere wenn die Steuervorrichtung entsprechende Roaming Partner kennt.

Das Endgerät, insbesondere die Sende- und Empfangseinrichtung des Endgeräts, umfasst eine Kommunikationsschnittstelle zur Kommunikation über das Kommunikationsnetz.

In einer bevorzugten Ausführungsform kann die Steuervorrichtung der Funktionseinheit dazu eingerichtet sein, auf das sichere Element zuzugreifen, Funktionen des Endgeräts auszuführen und über die Kommunikationsschnittstelle des Endgeräts zu sendende Nachrichten bereitzustellen. Darüber hinaus kann das Endgerät eine sichere Kommunikationseinheit umfassen. In einigen Ausführungsformen ist die sichere Kommunikationseinheit die Funktionseinheit.

Das Verfahren kann ferner umfassen: Ermitteln der Netzwerkkennung, die der neuen Länderkennung entspricht, basierend auf einer Betreiber-gesteuerten Netzwerkkonfiguration, die im sicheren Element gespeichert ist; und/oder Schreiben der Netzwerkkennung in eine Liste von äquivalenten Heimatnetzwerken, die im sicheren Element gespeichert ist.

Das Verfahren kann ferner ein Ermitteln der neuen Länderkennung durch eine Sende- und Empfangseinrichtung, vorzugsweise bei der Netzwerksuche und/oder durch eine Funktionseinheit außerhalb des sicheren Elements basierend auf einem Ortungssignal umfassen. Zur Ermittlung der neuen Länderkennung durch die Funktionseinheit basierend auf dem Ortungssignal kann die Funktionseinheit eine Nachschlagetabelle auslesen und vorzugsweise umfassen.

Das Verfahren kann ferner ein Kopieren zumindest einer Netzwerkkennung der Betreiber-gesteuerten Netzwerkkonfiguration, deren Länderkennung der neuen Länderkennung entspricht, aus der Betreiber-gesteuerten Netzwerkkonfiguration, vorzugsweise gespeichert in der Basisdatei OPLMN, in die Liste von äquivalenten Heimatnetzwerken, vorzugsweise gespeichert in der Basisdatei EHPLMN, umfassen.

### Detaillierte Beschreibung von Ausführungsbeispielen

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein. Optionale Elemente sind durch gestrichelte Linien dargestellt.
Fig. 1 zeigt eine schematische Darstellung eines sicheren Elements nach einem Aspekt der Offenbarung.
Fig. 2 zeigt eine schematische Darstellung eines sicheren Elements, das in ein Endgerät nach einem Aspekt der Erfindung kommunikativ eingebunden bzw. gekoppelt ist.
Fig. 3 zeigt eine schematische Darstellung eines Endgerätes nach einem Aspekt der Offenbarung.
Fig. 4 zeigt ein Flussdiagramm eines Verfahrens zum Konfigurieren einer Netzwerksuche nach einem Aspekt der Offenbarung.

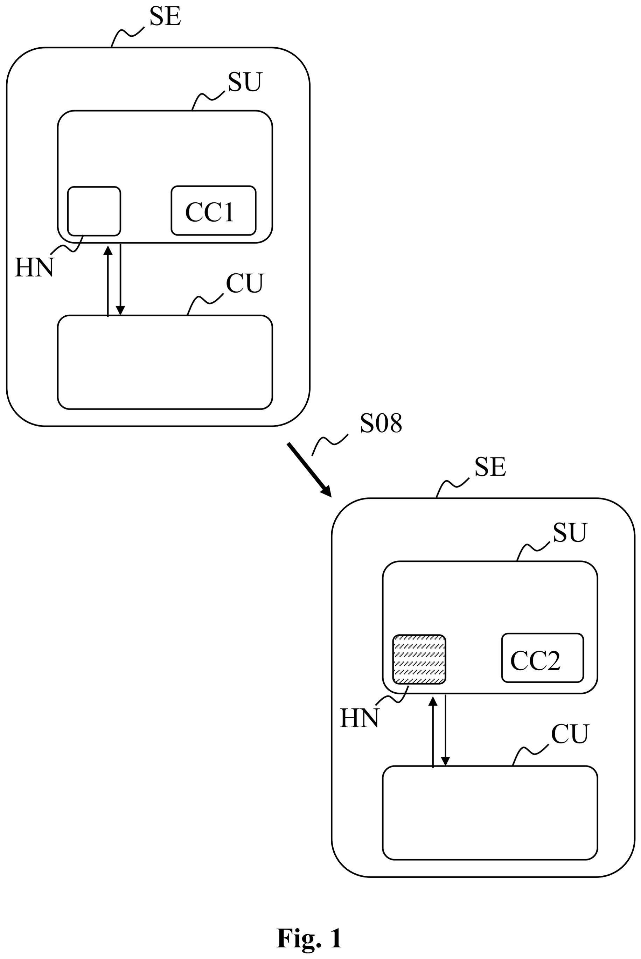

In Fig. 1 ist ein Ausführungsbeispiel eines sicheren Elements SE gemäß einem Aspekt der Erfindung schematisch dargestellt. Das sichere Element SE weist einen Speicherbereich SU und eine Steuervorrichtung CU auf. In dem Speicherbereich SU sind eine Heimatnetzwerkkonfiguration HN und eine Länderkennung CC1 abgelegt. Die Länderkennung CC1 kann als erste Länderkennung bezeichnet werden.

Die Steuervorrichtung CU ist eingerichtet, den Speicherbereich SU auszulesen und/oder zu beschreiben.

In Fig.1 sind zwei Zustände des sicheren Elements SE, die logisch durch Ausführung des Verfahrensschritts S08 "Schreiben der neuen Netzwerkkennung in die Heimatnetzwerkkonfiguration" miteinander verknüpft sind, dargestellt. Der Unterschied zwischen diesen beiden Zuständen des sicheren Elements SE konzentriert sich auf die Heimatnetzwerkkonfiguration HN. Im ersten Zustand, links oben der Fig. 1 dargestellt, enthält die Heimatnetzwerkkonfiguration HN eine voreingestellte Netzwerkkennung, nach der ein Modem, das mit dem sicheren Element gekoppelt ist, nach dessen Aufstarten suchen soll. Die voreingestellte Netzwerkkennung der Heimatnetzwerkkonfiguration HN kann die erste Länderkennung umfassen.

Die Steuervorrichtung CU ist eingerichtet eine neue Länderkennung CC2 zu empfangen. Die neue Länderkennung CC2 wird während eines Registrierungsversuchs in das Kommunikationsnetz, das der in der Heimatnetzwerkkonfiguration HN hinterlegten Netzwerkkennung entsprechen kann, empfangen.

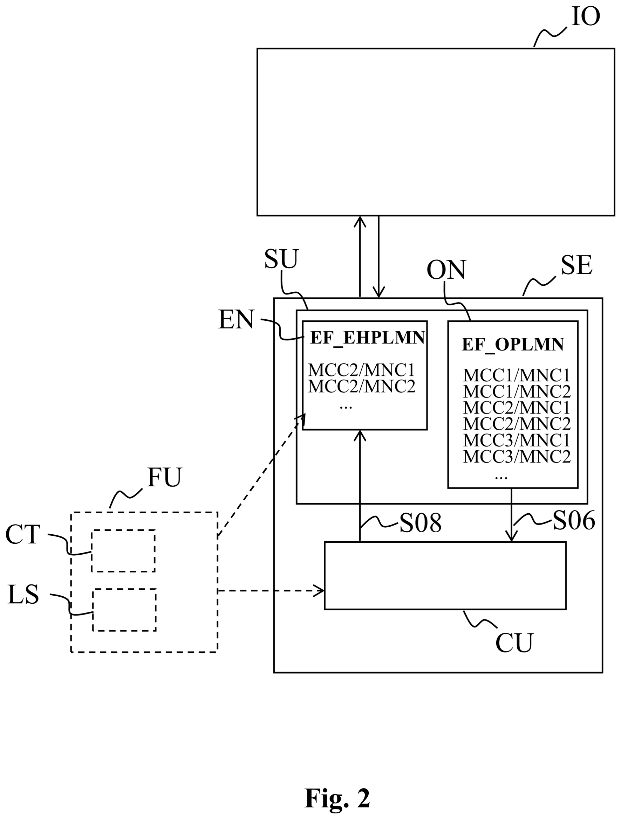

Sofern sich die neue Länderkennung CC1 von der alten bzw. ersten Länderkennung CC1 unterscheidet, ist die Steuervorrichtung CU eingerichtet, eine Netzwerkkennung zur neuen Länderkennung CC1 zu ermitteln und diese neue Netzwerkkennung im Verfahrensschritt S08 in die Heimatnetzwerkkonfiguration HN zu schreiben. Diese Funktionalität der Steuervorrichtung CU, die den Kern der Erfindung betrifft, ist näher in Bezug zur Fig. 2 beschrieben.

Im zweiten Zustand, rechts unten der Fig. 1 dargestellt, enthält die Heimatnetzwerckonfiguration HN folglich ferner die neue Netzwerkkennung, vorzugsweise in der Basisdatei EF_EHPLMN.

In Fig. 2 ist eine schematische Darstellung eines sicheren Elements SE, das in ein Endgerät TD nach einem Aspekt der Erfindung kommunikativ eingebunden bzw. gekoppelt ist, dargestellt.

In dem Ausführungsbeispiel des sicheren Elements SE nach Fig. 2 ist der Vorgang um das Ermitteln der neuen Netzwerkkennung und das Schreiben der neuen Netzwerkkennung in die Heimatnetzwerkkonfiguration HN detailliert dargestellt. Das sichere Element SE kann, wie in Fig. 2 gezeigt, mit einer Sende- und Empfangseinrichtung IO gekoppelt sein. Ferner kann das sichere Element SE, in Fig. 2 als rein optional dargestellt, mit einer Funktionseinheit FU gekoppelt sein.

Das sichere Element SE kann von der Sende- und Empfangseinrichtung IO und/oder der Funktionseinheit FU eine neue Länderkennung, etwa während eines Registrierungsversuchs in einem Kommunikationsnetz, empfangen. Im vorliegenden Beispiel kann das sichere Element SE bzw. dessen Steuervorrichtung CU die neue Länderkennung "MCC2" empfangen, während im Speicherbereich SU des sicheren Elements SE eine andere Länderkennung abgelegt ist (nicht gezeigt). Wie in Fig. 2 gezeigt kann daraufhin die Steuervorrichtung CU beispielsweise die Betreiber-gesteuerte Netzwerkkonfiguration ON auslesen, um zu ermitteln, welche Netzwerckennungen für den neuen Ländercode "MCC2" in Frage kommen. Im vorliegenden Beispiel sind es die Netzwerkkennungen "MCC2/MCN1" und "MCC2/MCN2", also zwei verschiedene Netzwerkkennungen für denselben Ländercode "MCC2". Die Steuervorrichtung CU kann konfiguriert sein, die beiden ermittelten Netzwerkkennungen aus der Basisdatei EF_OPLMN der Betreiber-gesteuerten Netzwerkkonfiguration ON zu kopieren und in die Heimatnetzwerkkonfiguration HN, vorzugsweise in die Liste von äquivalenten Heimatnetzwerken EN einzufügen. Die Liste von äquivalenten Heimatnetzwerken EN kann als Basisdatei EF_EHPLMN vorliegend. Die Steuervorrichtung CU kann eingerichtet sein, die ermittelten Netzwerkkennungen an erster Stelle der Basisdatei EF_EHPLMN einzufügen.

Bei einem Fortsetzen des Registrierungsversuchs, z.B. durch einen Neustart des sicheren Elements SE oder durch eine File-Change-Notifikation durch die Sende- und Empfangseinrichtung IO, kann die Sende- und Empfangseinrichtung vorrangig nach den zum neuen Ländercode "MCC2" ermittelten Netzwerkkennungen suchen, und das Endgerät daher erheblich schneller in einem neuen Kommunikationsnetz registrieren.

Optional kann das sichere Element SE ferner mit einer externen Funktionseinheit FU verbunden sein. Die Funktionseinheit FU kann in dem Endgerät TD integriert sein, oder sogar endgeräteextern sein. Die Funktionseinheit FU kann eine eigene Steuervorrichtung CT und eine Sensoreinheit umfassen. Als Sensoreinheit ist in Fig. 2 ein Ortungssensor LS exemplarisch dargestellt.

Falls die Funktionseinheit FU einen Ortungssensor LS aufweist, kann die Steuervorrichtung CT der Funktionseinheit FU eingerichtet sein, basierend auf einem Ortungssignal des Ortungssensors LS eine neue Länderkennung, wie "MCC2", zu bestimmen bzw. ermitteln. Die Funktionseinheit FU, insbesondere deren Steuervorrichtung CU kann eingerichtet sein, die neue Länderkennung der Steuervorrichtung CU des sicheren Elements SE zu übermitteln. Die Funktionseinheit FU, insbesondere deren Steuervorrichtung CU kann eingerichtet sein, basierend auf der neuen Länderkennung zumindest eine neue Netzwerkkennung zu ermitteln und die zumindest eine neue Netzwerkkennung der Steuervorrichtung CU des sicheren Elements SE zu übermitteln. Die Funktionseinheit FU, insbesondere deren Steuervorrichtung CU kann eingerichtet sein, die zumindest eine neue Netzwerkkennung direkt in die Heimatnetzwerkkonfiguration HN, insbesondere in die Basisdatei EF_EHPLMN, des sicheren Elements SE zu schreiben.

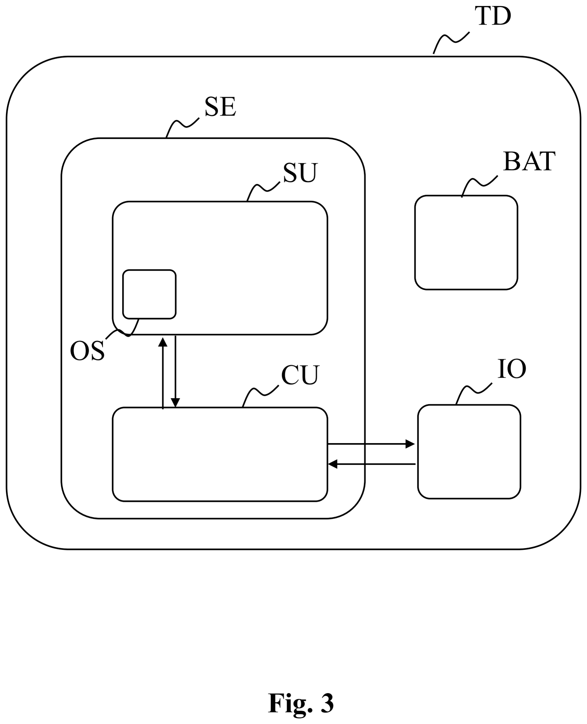

In Fig. 3 ist eine schematische Darstellung eines Endgerätes TD nach einem Aspekt der Offenbarung dargestellt. Das Endgerät TD kann auch als Terminalgerät ausgebildet bzw. bezeichnet sein.

Das Endgerät TD umfasst ein sicheres Element SE, insbesondere wie vorstehend mit Bezug zu den Fig. 1 und Fig. 2 beschrieben. Das Endgerät TD umfasst eine Sende- und Empfangseinrichtung IO, bspw. ein Modem. Das Endgerät TF umfasst ferner eine Batterie BAT zur Versorgung des sicheren Elements SE, der Sende- und Empfangseinrichtung IO und einer optionalen Funktionseinheit (FU, siehe Fig. 2) mit elektrischer Energie. Vorzugsweise ist die Batterie eine Primärbatterie, die nicht wieder aufladbar ist. Daraus ergibt sich ein großer Nutzen des sicheren Elements nach einem Aspekt der Erfindung, da aufgrund eingesparter Verbindungsversuche der Batteriespeicher länger hält und dadurch letztlich die Laufzeit des Endgeräts TD wesentlich verlängert werden kann.

Die Kommunikation zwischen dem sicheren Element SE und der Sende- und Empfangseinrichtung IO ist vorstehend in Bezug zur Fig. 2 erläutert.

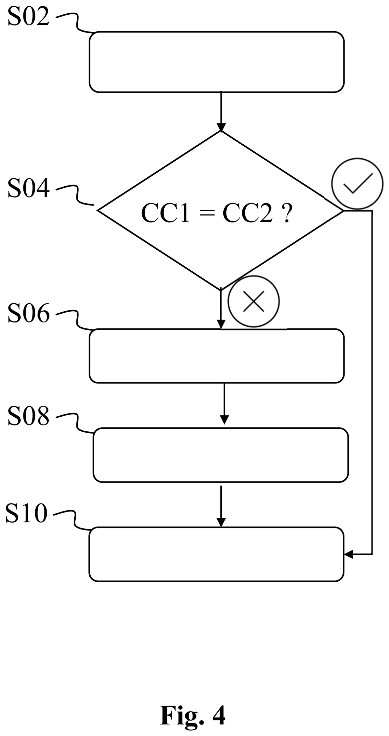

In Fig. 4 ist ein Flussdiagramm eines Verfahrens zum Konfigurieren einer Netzwerksuche nach einem Aspekt der Offenbarung dargestellt.

In einem ersten Verfahrensschritt S02 wird eine neue Länderkennung CC2 empfangen. Die neue Länderkennung CC2 kann von einer Sende- und Empfangseinrichtung IO, mit der das sichere Element SE verbunden ist, und/oder durch eine Funktionseinheit FU, mit der das sichere Element SE verbunden ist, empfangen werden.

In einem zweiten Verfahrensschritt S04 wird die neue Länderkennung CC2 mit einer im Speicherbereich SU des sicheren Elements SE abgelegten Länderkennung CC1 verglichen. Dabei kann festgestellt werden, dass die beiden Länderkennungen CC1, CC2 identisch sind. Dieser Fall ist in Fig. 4 durch einen eingekreisten Haken dargestellt. In diesem Fall wird das Verfahren direkt mit dem fünften Verfahrensschritt S10 fortgesetzt. Wird hingegen festgestellt, dass sich die neue Länderkennung CC2 von der abgelegten Länderkennung CC1 unterscheidet, wird das Verfahren mit dem dritten Verfahrensschritt S06 fortgesetzt. Dieser Fall ist in Fig. 4 durch ein eingekreistes "X" dargestellt.

In einem dritten Verfahrensschritt S06 wird eine neue Netzwerkkennung basierend auf der neuen Länderkennung CC2 ermittelt. Hierzu kann die Liste der eingetragenen Roaming Partner, also EF_OPLMN, ausgelesen werden. In der Regel sind ein oder mehrere Netzwerkkennungen für die neue Länderkennung CC2 auffindbar bzw. ermittelbar.

In einem vierten Verfahrensschritt S08 wird die zumindest eine neue Netzwerkkennung, von der jede der neuen Länderkennung CC2 entspricht bzw. diese umfasst, in die Heimatnetzwerkkonfiguration HN geschrieben. Vorzugsweise wird die zumindest eine neue Netzwerkkennung in die Liste von äquivalenten Heimatnetzwerken EN geschrieben. Besonders vorzugsweise wird die zumindest eine neue Netzwerckennung an erster Stelle der Basisdatei EHPLMN, auch als EF_EHPLMN bezeichnet, geschrieben.

In einem fünften Verfahrensschritt S10 wird der Registrierungsprozess fortgesetzt. Dieser Vorgang kann ein REFRESH des sicheren Elements umfassen.

Das Verfahren ist zur Ausführung in einem sicheren Element SE, bspw. wie mit Bezug zu den Fig. 1 und 2 beschrieben, konfiguriert. Hierzu kann ein maschinenlesbarer Code bereitgestellt werden, z. B. als JavaCard Applet für die Steuervorrichtung CU, der Befehle enthält, die bei Ausführung durch das sichere Element dieses zur Ausführung des Verfahrens veranlassen.

Alternativ oder zusätzlich kann das Verfahren zur Ausführung in einem Endgerät TD, insbesondere im Zusammenspiel des sicheren Elements SE mit einer Funktionseinheit FU und/oder einer Sende- und Empfangseinrichtung IO, konfiguriert sein.

### Bezugszeichenliste

- TD: Endgerät
IO Sende- und Empfangseinrichtung
SE Sicheres Element
SU Speicherbereich
HN Heimatnetzwerkkonfiguration
EN Liste von äquivalenten Heimatnetzwerken
ON Betreiber-gesteuerte Netzwerkkonfiguration
CC1 abgelegte Länderkennung
CC2 neue Länderkennung
CU Steuervorrichtung des sicheren Elements
BAT Batterie
FU Funktionseinheit
CT Steuervorrichtung der Funktionseinheit
LS Ortungssensor
- S02: Verfahrensschritt "Empfangen einer neuen Länderkennung"
- S04: Verfahrensschritt "Vergleichen der neuen Länderkennung mit der abgelegten Länderkennung"
- S06: Verfahrensschritt "Ermitteln einer neuen Netzwerkkennung"
- S08: Verfahrensschritt "Schreiben der neuen Netzwerkkennung in die Heimatnetzwerkkonfiguration"
- S10: Verfahrensschritt "Fortsetzen des Registrierungsversuchs"

## Patentansprüche

1. Sicheres Element (SE) zur Kommunikation über ein Kommunikationsnetz, wobei das sichere Element umfasst:
einen Speicherbereich (SU), in dem eine Heimatnetzwerkkonfiguration (HN) und eine Länderkennung (CC1) abgelegt sind, und
eine Steuervorrichtung (CU), die zu Folgendem konfiguriert ist:
Empfangen einer neuen Länderkennung (CC2) während eines Registrierungsversuchs in das Kommunikationsnetz,
wenn sich die neue Länderkennung (CC2) von der abgelegten Länderkennung (CC1) unterscheidet, Schreiben einer Netzwerkkennung, die der neuen Länderkennung (CC2) entspricht, in die Heimatnetzwerkkonfiguration (HN), und
Fortsetzen des Registrierungsversuchs.

2. Sicheres Element (SE) nach Anspruch 1, wobei in dem Speicherbereich (SU) ferner eine Betreiber-gesteuerte Netzwerkkonfiguration (ON) abgelegt ist, und
die Steuervorrichtung (CU) eingerichtet ist, die Netzwerkkennung, die der neuen Länderkennung (CC2) entspricht, basierend auf der Betreiber-gesteuerten Netzwerkkonfiguration (ON) zu ermitteln.

3. Sicheres Element (SE) nach dem vorhergehenden Anspruch, wobei die Betreiber-gesteuerte Netzwerkkonfiguration (ON) eine Liste von Netzwerkkennungen, die jeweils einer Länderkennung aus einer Vielzahl von Länderkennungen entsprechen, umfasst, und vorzugsweise als Basisdatei Operator Public Land Mobile Network - OPLMN - abgelegt ist.

4. Sicheres Element (SE) nach einem der vorhergehenden Ansprüche, wobei die Steuervorrichtung (CU) konfiguriert ist, die Netzwerkkennung von außerhalb des sicheren Elements (SE) zu empfangen.

5. Sicheres Element (SE) nach einem der vorhergehenden Ansprüche, wobei die Heimatnetzwerkkonfiguration (HN) eine Liste von äquivalenten Heimatnetzwerken (EN) umfasst, die vorzugsweise als Basisdatei Equivalent Home Public Land Mobile Network - EHPLMN - abgelegt ist, und wobei die Steuervorrichtung (CU) konfiguriert ist, die Netzwerkkennung in die Liste von äquivalenten Heimatnetzwerken (EN) zu schreiben.

6. Sicheres Element (SE) nach dem vorhergehenden Anspruch, wobei die Steuervorrichtung konfiguriert ist, zumindest eine Netzwerkkennung der Betreiber-gesteuerten Netzwerkkonfiguration (ON), deren Länderkennung der neuen Länderkennung (CC2) entspricht, aus der Betreiber-gesteuerten Netzwerkkonfiguration (ON) in die Liste von äquivalenten Heimatnetzwerken (EN) zu kopieren.

7. Sicheres Element (SE) nach einem der vorhergehenden Ansprüche, wobei die Steuervorrichtung (CU) konfiguriert ist, den Registrierungsversuch nach dem Empfangen der neuen Länderkennung (CC2) direkt fortzusetzen, wenn die neue Länderkennung (CC2) gleich der abgelegten Länderkennung (CC1) ist.

8. Endgerät (TD), umfassend:
ein sicheres Element (SE) nach einem der vorhergehenden Ansprüche;
eine Batterie (BAT); und
eine Sende- und Empfangseinrichtung (IO) zur Kommunikation über das Kommunikationsnetz, die konfiguriert ist, nach Netzwerken zu suchen und den neuen Ländercode (CC2) zu ermitteln.

9. Endgerät (TD) nach dem vorhergehenden Anspruch, ferner aufweisend eine Funktionseinheit, die eine Steuervorrichtung und einen Ortungssensor umfasst, wobei die Steuervorrichtung der Funktionseinheit konfiguriert ist, ein Ortungssignal des Ortungssensors zu empfangen, die neue Länderkennung (CC2) basierend auf dem Ortungssignal zu ermitteln und die neue Länderkennung (CC2) dem sicheren Element (SE) bereitzustellen.

10. Endgerät (TD) nach dem vorhergehenden Anspruch, wobei die Steuervorrichtung der Funktionseinheit ferner konfiguriert ist, basierend auf dem Ortungssignal die neue Länderkennung (CC2) jeweils für das aktuelle Land und zumindest ein Nachbarland zu ermitteln und die ermittelten neuen Länderkennungen (CC2) dem sicheren Element bereitzustellen.

11. Endgerät (TD) nach einem der vorhergehenden Ansprüche 9 oder 10, wobei die Steuervorrichtung der Funktionseinheit ferner konfiguriert ist, die neue Länderkennung (CC2) oder die neuen Länderkennungen (CC2) der Steuervorrichtung des sicheren Elements (SE) zu übermitteln und/oder die Netzwerkkennung, die der neuen Länderkennung (CC2) entspricht, direkt in die Liste von äquivalenten Heimatnetzwerken (EN) zu schreiben.

12. Verfahren zum Konfigurieren einer Netzwerksuche für einen Registrierungsversuch eines sicheren Elements (SE) in ein Kommunikationsnetz, das Verfahren umfassend:
Empfangen einer neuen Länderkennung (CC2);
Vergleichen der neuen Länderkennung (CC2) mit einer im sicheren Element (SE) abgelegten Länderkennung (CC1);
wenn sich die neue Länderkennung (CC2) von der abgelegten Länderkennung (CC1) unterscheidet:
Ermitteln einer Netzwerkkennung, die der neuen Länderkennung (CC2) entspricht; und
Schreiben der Netzwerkkennung in die Heimatnetzwerkkonfiguration (HN).

13. Verfahren nach dem vorhergehenden Anspruch, ferner umfassend:
Ermitteln der Netzwerkkennung, die der neuen Länderkennung (CC2) entspricht, basierend auf einer Betreiber-gesteuerten Netzwerkkonfiguration (ON), die im sicheren Element (SE) gespeichert ist; und/oder
Schreiben der Netzwerkkennung in eine Liste von äquivalenten Heimatnetzwerken (EN), die im sicheren Element gespeichert ist.

14. Verfahren nach einem der Ansprüche 12 oder 13, ferner umfassend ein Ermitteln der neuen Länderkennung (CC2) durch eine Sende- und Empfangseinrichtung (IO), vorzugsweise bei der Netzwerksuche und/oder durch eine Funktionseinheit außerhalb des sicheren Elements (SE) basierend auf einem Ortungssignal.

15. Verfahren nach einem der Ansprüche 12 - 14, ferner umfassend ein Kopieren zumindest einer Netzwerkkennung der Betreiber-gesteuerten Netzwerkkonfiguration (ON), deren Länderkennung der neuen Länderkennung (CC2) entspricht, aus der Betreiber-gesteuerten Netzwerkkonfiguration (ON), vorzugsweise gespeichert in der Basisdatei OPLMN, in die Liste von äquivalenten Heimatnetzwerken (EN), vorzugsweise gespeichert in der Basisdatei EHPLMN.
